# EUROPÄISCHE PATENTSCHRIFT

(11) **EP 1 092 742 B1**
(45) Veröffentlichungstag und Bekanntmachung des Hinweises auf die Patenterteilung: **10.09.2003**
(21) Anmeldenummer: 00120244.9
(22) Anmeldetag: 27.09.2000
(51) Int. Cl.: C08G 63/668, C09D 167/06, B01F 17/00

(54) **Emulgatoren für Alkydharzemulsionen mit hohem Feststoffgehalt**
Emulsifiers for high solids alkyd resin emulsions
Emulsifiants pour des émulsions de résines alkydes à haute teneur en solides

(30) Priorität: 15.10.1999 AT 173799
(43) Veröffentlichungstag der Anmeldung: 18.04.2001
(73) Patentinhaber: Surface Specialties Austria GmbH, 8402 Werndorf (AT)
(72) Erfinder: Urbano, Edmund Dr., 8044 Graz (AT); Gobec, Michael Dr., 8010 Graz (AT); Ferk, Oliver, 8054 Graz (AT)
(74) Vertreter: Deckers, Hellmuth, Dr.

(56) Entgegenhaltungen:
- EP-A- 0 325 054
- AT-B- 333 035
- US-A- 4 410 687
- DATABASE WPI Section Ch, Week 198712 Derwent Publications Ltd., London, GB; Class A23, AN 1987-082380 XP002175991 & JP 62 032154 A (KANSAI PAINT CO LTD), 12. Februar 1987 (1987-02-12)

## Beschreibung

Die Erfindung betrifft wasserlösliche oder wasserdispergierbare Polyester, die sich als Emulgator für Alkydharze eignen, die damit hergestellten festkörperreichen Alkydharzemulsionen sowie deren Verwendung.

In den letzten Jahren sind wasserverdünnbare Bindemittel für Lacke und andere Beschichtungsmittel in verschiedener Form im wesentlichen aus ökologischen Gründen entwickelt worden. Die für höherwertige Anstrichmittel verwendeten wäßrigen Alkydharzemulsionen weisen aus Gründen der Herstellung, der Stabilisierung oder ihrer weiteren Verarbeitung einen niedrigen Festkörper-Massenanteil von maximal 45 %, und mehr oder weniger große Anteile an organischen Lösemitteln und/oder an flüchtigen Neutralisationsmitteln auf, wie Aminen und Ammoniak.

Diese Anteile können zwar, wie beschrieben in der US-A 3,269,967 und der US-A 3,440,193, bei Verwendung von Emulgatoren wie Alkylphenoläthoxylaten und Fettalkoholäthoxylaten vermindert werden. Diese niedrigmolekularen Stoffe liegen im gehärteten Film unverändert vor und beeinflussen die Gebraucheigenschaften der Filme in negativer Weise, wie Geschwindigkeit und Ausmaß der Trocknung, Härte und Wasser- bzw. Wetterfestigkeit.

In den Patentschriften AT-B 325 742, 333 035 und 336 277 werden mit Polyäthylenglykol modifizierte Emulgatorharze zur Emulgierung von Alkydharzen eingesetzt, wodurch die oben genannten Nachteile weitgehend vermieden werden sollen. Es ist jedoch erforderlich, diesen Bindemitteln eine hohe Menge von Neutralisationsmitteln und organischen Hilfslösemitteln zuzusetzen, damit stabile Emulsionen resultieren. Durch den hohen Anteil an Emulgatorharz, der hier erforderlich ist, zeigen die aus solchen Bindemittelemulsionen erhaltenen Filme ebenfalls Mängel in der Wasser- und Wetterfestigkeit.

Die gemeinsame Verwendung von Alkoxypolyäthylenglykol (Polyäthylenglykolmonoalkyläther) und einkondensierten Einheiten abgeleitet von Polyhydroxycarbonsäuren zur Hydrophilisierung des Alkydharzes führt nach der US-A 3,457,206 in Verbindung mit der Neutralisation freier Carboxylgruppen des Harzes mit Alkanolaminen und Alkalihydroxiden zwar zu wäßrigen Alkydharzen, die sich für feststoffreiche Anstrichmittel aber nicht eignen und nur geringe Wetterfestigkeit besitzen.

Nach WO 94/18260 können durch Verwendung von Alkoxypolyäthylenglykol auch ohne Neutralisation saurer Gruppen wasserlösliche Harze erhalten werden, die als Dispergiermittel oder Holzschutzmittel Verwendung finden. Diese Harze sind in wäßriger Lösung aber leicht verseifbar und können erst kurz vor der Anwendung mit Wasser verdünnt werden und sie eignen sich nicht fiir wetterfeste Beschichtungen.

Überraschenderweise wurde nun gefunden, daß man feststoffreiche, wäßrige Emulsionen von Alkydharzen erhält, wenn die Herstellung der Emulsionen unter Verwendung ausgewählter Polyester als Emulgatorharze und bei bestimmten Verfahrensbedingungen erfolgt. Unter "feststoffreich" werden hier solche wäßrigen Alkydharzemulsionen verstanden, die einen Festkörper-Massenanteil von 55 % und mehr, vorzugsweise von mindestens 60 % aufweisen.

Die vorliegende Erfindung betrifft demgemäß einen wasserlöslichen oder wasserdispergierbaren Polyester **B** als Emulgator für wäßrige Emulsionen von Alkydharzen A, dadurch gekennzeichnet, daß der Polyester **B** erhältlich ist durch Umsetzung unter Polykondensationsbedingungen von Polyhydroxylkomponenten **Ba** aus der Klasse der Zuckeralkohole mit mehr als 4 Kohlenstoffatomen und mindestens drei, vorzugsweise mindestens vier, und besonders bevozugt mindestens fünf Hydroxylgruppen pro Molekül, Alkoxypolyäthylenglykolen **Bb** mit 1 bis 4 Kohlenstoffatomen im Alkylrest und einer zahlenmittleren molaren Masse Mₙ von 500 bis 2000 g/mol, cycloaliphatischen Dicarbonsäuren **Bc** und ungesättigten oder gesättigten Fettsäuren **Bd** mit 10 bis 22 Kohlenstoffatomen.

Zusätzlich können in der Eduktmischung (Mischung der Ausgangsstoffe) noch Monocarbonsäuren **Be** eingesetzt werden, die von den Fettsäuren **Bd** verschieden sind.

Zur Herstellung der Polyester **B** werden bevorzugt die folgenden Massenanteile in der Eduktmischung eingesetzt:
10 bis 40 %, bevorzugt 15 bis 35 %, der Polyhydroxylkomponente **Ba**
35 bis 70 %, bevorzugt 40 bis 60 %, des Alkoxypolyäthylenglykols **Bb ,**
10 bis 30 %, bevorzugt 15 bis 25 %, der cycloaliphatischen Dicarbonsäure **Bc**
15 bis 40 %, bevorzugt 20 bis 35 %, der Fettsäure Bd und
0 bis 15 %, bevorzugt 3 bis 10 %, einer anderen Monocarbonsäure **Be ,** die von **Bd** verschieden ist,

Die Polykondensation erfolgt bevorzugt bis zu einer Säurezahl des Polykondensats **B** unter 10 mg/g, wobei die Lösung von **B** in Wasser mit einem Festkörper-Massenanteil von 30 bis 60 % eine dynamische Viskosität von 5000 bis 50 000 mPa·s besitzt.

Gegenstand der Erfindung sind weiter wäßrige Alkydharzemulsionen mit einem Festkörper-Massenanteil von vorzugsweise 60 bis 80 %, enthaltend Massenanteile, bezogen auf den Feststoff der Emulsion, von 70 bis 97 %, bevorzugt 80 bis 95 % eines nicht wasserlöslichen Alkydharzes **A** mit einem Ölgehalt von 40 bis 85 %, bevorzugt 45 bis 75 %, und einer Säurezahl kleiner als 15 mg/g, bevorzugt kleiner als 10 mg/g, und 3 bis 30 %, bevorzugt 5 bis 20 %, des als Emulgierharz verwendeten Polyesters **B**.

Die Massenanteile von **A** und **B** werden dabei so gewählt, daß ihre Summe 100 % beträgt.

Gegenstand der vorliegenden Erfindung ist weiter ein Verfahren zur Herstellung der erfindungsgemäßen wäßrigen Alkydharzemulsion, umfassend die Synthese der Emulgatorharz-Komponente **B** durch Umsetzung der genannten Komponenten **Ba** bis **Be** bei einer Temperatur von 160 bis 250 °C unter Veresterungsbedingungen, wobei auch die bekannten die Veresterungsreaktion beschleunigenden Katalysatoren in den üblichen Mengen zugesetzt werden können. Das durch die Veresterungsreaktion gebildete Wasser wird vorzugsweise durch einen durch die Reaktionsmischung geführten Inertgasstrom oder eine organisches Lösungsmittel, das mit Wasser ein Azeotrop bildet, abgezogen. Im letzteren Fall wird das Lösungsmittel nach Abtrennung des Wassers in die Reaktionsmischung zurückgeführt und nach beendeter Umsetzung abdestilliert. Danach folgen die Schritte: Verdünnen des erhaltenen Emulgatorharzes mit Wasser auf einen Festkörper-Massenanteil von ca. 30 bis ca. 60 %, wobei die Viskosität der wäßrigen Lösung vorzugsweise zwischen 5000 und 50 000 mPa·s liegt, Mischen des wasserunlöslichen Alkydharzes **A** mit der wäßrigen Lösung des Emulgatorharzes bei einer Temperatur unter 100°C, und schließlich Verdünnen der so erhaltenen Mischung mit Wasser zu einem Festkörper-Massenanteil der resultierenden Emulsion von bevorzugt ca. 60 bis 80 % und einer dynamischen Viskosität von bevorzugt 500 bis 3000 mPa·s.

Die Vermischung von Alkydharz **A** und Emulgator **B** kann so erfolgen, daß das Alkydharz, in flüssiger oder gegebenenfalls geschmolzener Form in die wäßrige Lösung des Polyester eingerührt wird. Es ist auch möglich, die wäßrige Lösung des Polyesters **B** in das flüssige oder geschmolzene Alkydharz einzurühren, wobei dessen Temperatur dann vorzugsweise nicht mehr als 120 °C betragen soll. Eine vorteilhafte Ausführungsform ist die Herstellung der Emulsion in einem Mischrohr, das bevorzugt statische Mischer enthält. Eine weitere günstige Herstellungsweise ist die Vermischung in einer Rotor/Stator-Dispergiereinheit. Es ist jedoch in jedem Fall erforderlich, eine wäßrige Lösung oder Dispersion des Polyesters **B** vorab herzustellen.

Die Erfindung betrifft weiter die Verwendung der erfindungsgemäßen Alkydharzemulsionen als Bindemittel in Beschichtungsmitteln, insbesondere in Lacken und Anstreichmitteln.

Der Ölgehalt ist definiert als Massenanteil der Öle oder der von Ölen abgeleiteten Bausteine im Alkydharz, stets berechnet als Triglyceride.

Die Säurezahl ist gemäß DIN 53 402 (DIN EN ISO 3682) definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Es war überraschend und nicht vorhersehbar, daß durch den speziellen Aufbau des als Emulgierharz verwendeten wasserlöslichen Polyesters **B** eine ausreichend hohe Verseifungsbeständigkeit der wäßrigen Lösung und eine breite Verträglichkeit mit den zu emulgierenden Alkydharzen erreicht werden, die es erlauben, lösemittelfreie Alkydharze in Form ihrer Schmelze bei einer Temperatur bis zu 100°C zu emulgieren.

Während der Mischung der Komponenten bildet sich eine Öl-in-Wasser-Emulsion, wodurch bereits nach kurzer Homogenisierung die erhaltene Emulsion auf den gewünschten Festkörpergehalt verdünnt werden kann. Somit treten auch nicht die in herkömmlichen Verfahren, bei welchen der Emulgator bzw. das Emulgatorharz mit dem zu emulgierenden Harz vorgemischt werden, zu Beginn der Wasserzugabe festzustellenden sehr starken Viskositätserhöhungen auf, welche eine Homogenisierung verhindern oder zumindest erschweren können.

Mit Hilfe der erfindungsgemäßen wasserlöslichen Polyester **B** und des beschriebenen Verfahrens können unterschiedliche als Bindemittel für Beschichtungsmaterialien dienende an sich nicht wasserlösliche Alkydharze **A** in stabile und für die weitere Verarbeitung bzw. Anwendung geeignete wäßrige Emulsionen übergeführt werden. Zu den bevorzugten nicht wasserlöslichen Alkydharzen zählen mittel- oder langölige Alkydharze mit einem Ölgehalt (Massenanteil) von 40 bis 85 %, die gegebenenfalls in bekannter Weise, z.B. durch Kolophonium oder den Einbau von Urethangruppen modifiziert sein können. Selbstverständlich können auch Gemische dieser Harze zum Einsatz kommen, sofern sie miteinander "verträglich" (d.i. ohne Phasentrennung mischbar) sind.

Der Aufbau und die Herstellung dieser Harze **A** sind dem Fachmann bekannt und in der einschlägigen Fachliteratur ausführlich beschrieben. Die Harze werden vorteilhafterweise in ihrer 100 %igen Form (also ohne Zusatz von Lösungs- oder Verdünnungsmitteln) eingesetzt.

Der als Komponente **B** verwendete wasserlösliche Polyester dient als Emulgierharz und wird in Form seiner wäßrigen Lösung mit einem Festkörper-Massenanteil von 30 bis 60 % und einer dynamischen Viskosität von 5000 bis 50 000 mPa·s eingesetzt. Der pH-Wert dieser Lösung beträgt 2,5 bis 5, hat aber bei den erfindungsgemäßen Produkten nur geringen Einfluß auf die Stabilität. So zeichnen sich diese Lösungen durch eine konstante Viskosität und nur geringem Anstieg der Säurezahl während einer Lagerung von 4 Wochen aus. Der verseifungsbeständige Charakter wird offenbar durch die erfindungsgemäße Verwendung von Zuckeralkoholen als Polyhydroxylkomponente und cycloaliphatischen Dicarbonsäuren als Polycarboxylkomponente erreicht.

Bei der Veresterung der Zuckeralkohole **Ba** erfolgt wahrscheinlich eine Dehydratisierung und ein Ringschluß zu Anhydroformen, wodurch überraschenderweise eine bessere Verträglichkeit mit den zu emulgierenden Alkydharzen und eine höhere Stabilität der erfindungsgemäßen Alkydharzemulsionen erreicht werden.

Als Zuckeralkohole **Ba** werden bevorzugt Hexite (C₆-Zuckeralkohole) verwendet, sie können aber teilweise oder auch gänzlich durch Pentite (C₅-Zuckeralkohole) ersetzt werden. Bevorzugt eingesetzt werden unter den Hexiten Sorbit, Mannit und Dulcit, unter den Pentiten Arabit und Xylit, sowie deren Mischungen.

Die Alkoxypolyäthylenglykole **Bb** haben 1 bis 8, bevorzugt 1 bis 4 KohlenstoffAtome im Alkoxyrest und eine zahlenmittlere molare Masse von 500 bis 2000, bevorzugt 600 bis 1800 g/mol. Bis zu 20 % der Oxyäthyleneinheiten können auch durch Oxypropyleneinheiten ersetzt sein. Besonders bevorzugt werden Methoxy-, Äthoxy und n-Butoxy-polyäthylenglykole mit einer zahlenmittleren molaren Masse von 600 bis 1800 g/mol.

Als cycloaliphatische Dicarbonsäuren **Bc** eignen sich gesättigte sowie teilweise ungesättigte Säuren mit 6 bis 12, insbesondere 8 bis 10 Kohlenstoffatomen, wie Hexahydrophthalsäure, Tetrahydrophthalsäure und ihre Alkylderivate z.B. Methyltetrahydrophthalsäure, die vorzugsweise in Form ihrer Anhydride eingesetzt werden. Ebenfalls eingesetzt werden können Cyclohexan-1,3- und 1,4-dicarbonsäure und die von polycyclischen, insbesondere bicyclischen Kohlenwasserstoffen abgeleiteteten Dicarbonsäuren oder deren Anhydride, wie beispielsweise Bicyclo[2.2.2]oct-5-en-2,3-dicarbonsäureanhydrid. Überraschenderweise haben sich Fumarsäure, Bernsteinsäureund Maleinsäureanhydrid sowieo aromatische Dicarbonsäuren wie z.B. Phthalsäure, Iso- und Terephthalsäure nicht bewährt, sie ergeben eine höhere Verseifungsrate und eine schlechtere Stabilität der Alkydharzemulsionen.

Für die Emulgierung von oxydativ trocknenden Alkydharzen werden ungesättigte Fettsäuren **Bd** mit einer Jodzahl von mindestens 100, vorzugsweise von 120 bis 200 bevorzugt, wobei isolierte und konjugierte Doppelbindungen vorliegen können. Sie werden beispielsweise aus pflanzlichen Ölen wie Sojaöl, Fischöl, Sonnenblumenöl, Leinöl, Safloröl und Baumwollsaatöl durch Verseifung gewonnen oder entstammen der Tallöldestillation. Fettsäuren mit konjugierten Doppelbindungen werden durch katalytische Isomerisierung von natürlichen Fettsäuren oder aus dehydratisiertem Rizinusöl (Rizinenfettsäure) erhalten.

Daneben können teilweise oder vollständig auch gesättigte Fettsäuren **Bd** mit 10 bis 22 Kohlenstoffatomen verwendet werden, sofern eine oxydative Trocknung der Komponente **B** nicht benötigt wird. Geeignet sind beispielsweise Laurin-, Palmitinund Stearinsäure.

Zur Modifikation der Komponente **B** können auch andere Monocarbonsäuren **Be** mit 6 bis 40 Kohlenstoffatomen eingesetzt werden, die keine Fettsäuren sind, vor allem verzweigt oder cyclische aliphatische oder auch aromatische Carbonsäuren. Beispiel für geeignete Säuren sind Benzoesäure, tert.-Butylbenzoesäure, Harzsäuren wie sie im Kolophonium vorliegen, und verzweigte Carbonsäuren wie z.B. Isononansäure oder Versaticsäure.

Zur Herstellung der Emulsion werden die Komponenten in einem Massenverhältnis von bevorzugt 70 bis 95 % der Komponente **A** und 5 bis 30 % der Komponente **B** (in Form der wäßrigen Lösung), jeweils bezogen auf die Masse des Feststoffes, gemischt. Nach gründlicher Homogenisierung kann die so erhaltene Emulsion auf den gewünschten Feststoffgehalt verdünnt werden, wobei sie bei Zugabe von weiteren Mengen von Wasser einen gleichmäßigen Viskositätsabfall zeigt.

Beim erfindungsgemäßen Verfahren können als Komponente **A** auch aufgeschmolzene Festharze mit einer Temperatur bis zu 120 °C zur kalten, wäßrigen Emulgatorharzlösung zugegeben werden, so daß eine Mischtemperatur von maximal 100 °C erreicht wird. Auch die Zugabe der wäßrigen Emulgierharzlösung zum aufgeschmolzenen Festharz ist möglich, sofern dadurch eine Mischtemperatur von 100 °C nicht überschritten wird.

Die erfindungsgemäß hergestellten Emulsionen können je nach Art des emulgierten Alkydharzes als Bindemittel für Lacke, sowie für Beschichtungsmittel von Textilien oder mineralischen Materialien u.ä. eingesetzt werden. Auf dem Anstrichsektor lassen sich auf Basis der erfindungsgemäßen Emulsionen Klarlacke, Lasuren, Grundierungen und Decklacke formulieren.

Für die Beschichtung von Werkstücken aus Eisen oder Stahl werden die Emulsionen vorzugsweise mit einem pH-Wert von über 7 eingesetzt, um die bei der Verwendung von sauren wäßrigen Lacksystemen auftretende Flugrostbildung zu vermeiden. Die Einstellung des pH-Wertes mit Alkali- oder Erdalkalihydroxiden kann in jeder Phase des Verfahrens erfolgen, auf die Stabilität der Emulsion hat sie keinen Einfluß.

Die folgenden Beispiele erläutern die Erfindung. Alle Angaben in Teilen und Konzentrationsangaben in Prozent sind Massenanteile, sofern nichts anderes angegeben ist. Die Messungen der Viskosität wurden gemäß DIN ISO 3219 bei 23 °C durchgeführt. In den Beispielen wurden folgende Produkte eingesetzt:

### Komponente A

Als Komponente **A** wurden handelsübliche Alkydharze in ihrer lösemittelfreien Form (100 % Festkörper-Massenanteil) eingesetzt. In der Tabelle 1 sind ihre Beschreibung und Kennwerte zusammengefaßt.

**Tabelle 1**

| Komponente | Charakteristik | Hydroxylzahl in mg/g | Säurezahl in mg/g | Viskosität (Lösung) |
|---|---|---|---|---|
| A₁ | trocknendes Alkydharz, | ca. 60 | unter 10 | 150 mPa·s |
| | 67 % Sojaöl | | | 50 % in Testbenzin |
| A₂ | trocknendes Alkydharz, | ca. 100 | unter 15 | 200 mPa·s |
| | 47 % Fettsäuren, | | | 60 % in Xylol |
| | 6 % Benzoesäure | | | |
| A₃ | trocknendes Alkydharz, | ca. 20 | unter 8 | 500 mPa·s |
| | 75 % Sojaöl | | | 70 % in Testbenzin |
| A₄ | trocknendes Alkydharz, | ca. 20 | unter 10 | 1700 mPa·s |
| | 85 % Fettsäuren | | | 100 %ig |
| | 3 % Versaticsäureglycidylester | | | |

Das verwendete Testbenzin hatte einen Volumenanteil an Aromaten von ca. 18 % und einen Siedebereich von 140 bis 180 °C.

Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

### Komponente B

### Beispiel B₁:

In einem üblichen Kunstharzreaktor wurden 476 kg Sonnenblumenölfettsäure, 176 kg Sorbit, 335 kg Tetrahydrophthalsäureanhydrid, 1 kg Triphenylphosphin und 2 kg Dibutylzinndilaurat als Katalysator auf 180 °C erhitzt und 820 kg Methoxypolyäthylenglykol mit einer zahlenmittleren molaren Masse von 750 g/mol zugegeben und weiter auf 230 °C geheizt. Nach einer Azeotropdestillation bei 230 °C mit Xylol als Kreislaufmittel und anschließender Destillation unter vermindertem Druck zur Entfernung des Kreislaufmittels wurden 1850 kg 100 %iges Produkt mit einer Säurezahl von 3 mg/g und einer dynamischen Viskosität, mit Wasser auf einen Festkörper-Massenanteil von 45 % verdünnt, von 7500 mPa·s erhalten.

### Beispiel B₂:

Wie in Beispiel B₁ wurden 860 kg Leinölfettsäure, 735 kg Sorbit, 805 kg Hexahydrophthalsäureanhydrid, 2 kg Triphenylphosphin und 4 kg Dibutylzinndilaurat als Katalysator auf 180 °C erhitzt und 2300 kg n-Butoxypolyäthylenglykol mit einer zahlenmittleren molaren Masse von 750 g/mol zugegeben und weiter auf 230 °C geheizt. Nach einer Azeotropdestillation bei 230 °C mit Xylol als Kreislaufmittel und anschließender Destillation unter vermindertem Druck zur Entfernung des Kreislaufmittels wurden 4500 kg 100 %iges Produkt mit einer Säurezahl von 2,5 mg/g und einer dynamischen Viskosität, mit Wasser auf 50 % verdünnt, von 5200 mPa·s erhalten.

### Beispiel B₃:

Wie in Beispiel B₁ wurden 56 kg Tallölfettsäure, 55 kg Sorbit, 66 kg Tetrahydrophthalsäureanhydrid, 0,3 kg Triphenylphosphin und 0,4 kg Dibutylzinndilaurat als Katalysator auf 180 °C erhitzt und 330 kg Methoxypolyäthylenglykol mit einer zahlenmittleren molaren Masse von 1800 g/mol zugegeben und weiter auf 230 °C geheizt. Nach einer Azeotropdestillation bei 230 °C mit Xylol als Kreislaufmittel und anschließender Destillation unter vermindertem Druck zur Entfernung des Kreislaufmittels wurden 500 kg 100 %iges Produkt mit einer Säurezahl von 3 mg/g und einer dynamischen Viskosität, mit Wasser auf 35 % verdünnt, von 18000 mPa·s erhalten.

### Vergleichsbeispiel Bᵥ:

Beispiel B₁ wurde wiederholt, jedoch statt 335 kg Tetrahydrophthalsäureanhydrid wurden 326 kg Phthalsäureanhydrid eingesetzt. Erhalten wurden 1840 kg Produkt mit einer Säurezahl von 5,5 mg/g und einer dynamischen Viskosität, auf 45% mit Wasser verdünnt, von 3200 mPa·s. Die Säurezahl der wäßrigen Emulsion wurde nach vierwöchiger Lagerung bei Raumtemperatur erneut bestimmt, sie war auf 12,0 mg/g angestiegen. Die Viskosität war (bei den gleichen Meßbedingungen) auf 450 mPa·s abgesunken. Diese Lösung war zwar ebenfalls als Emulgierharzkomponente für die Alkydharze der Beispiel A₁, A₂ und A₄ bei unmittelbar folgender Applikation ("frischer Zustand") geeignet, doch wurde nur eine erheblich geringere Lagerstabilität der daraus hergestellten Alkydharzemulsionen erreicht So wurde bereits bei einer Lagerung von 3 Wochen bei Raumtemperatur ein Absetzen der Emulsion beobachtet. In diesem Zustand ließ sich die Emulsion nach erneutem Aufrühren zwar verarbeiten, die damit hergestellten Lackierung zeigten jedoch unbefriedigenden Glanz, der bei Lagerung in feuchtem Klima (50 % relative Luftfeuchtigkeit, 23 °C, vier Wochen) weiter auf unter 50 % des Ausgangswertes absank.

### Beispiele 1 bis 7

Die erfindungsgemäße Herstellung der Emulsionen erfolgte in den in Tabelle 2 angegebenen Mengenverhältnissen und Bedingungen. In einem üblichen Kunstharzreaktor mit Ankerrührwerk wurde die Komponente **B** vorgelegt und die vorgewärmte Komponente **A** innerhalb von 60 Minuten unter Rühren zugegeben.

Nach einstündiger Homogenisierung wurde durch portionsweise Zugabe von Wasser auf den gewünschten Feststoffgehalt verdünnt. Eine allfällige pH-Wert-Einstellung erfolgt mit 5%iger Natriumhydroxidlösung.

Tabelle 2 enthält auch Angaben über die Anwendung der Emulsionen. Diese sind dem Fachmann geläufig und richten sich nach den Empfehlungen der Harzhersteller.

So wurden oxydativ trocknende Systeme mit Kobalt-Zirkon-Kombinationstrocknern (0,09 % Co- und 0,15 % Zr-Metallgehalt auf Festharz) und Butanonoxim als Antihautmittel versetzt und die Trocknung und Filmbeschaffenheit im Vergleich zur lösemittelhaltigen Lieferform des Harzes beurteilt

Alle Emulsionen ergaben Filme, welche den lösemittelhaltigen Systemen in Trocknungseigenschaften und Filmbeschaffenheit entsprachen. Die Stabilität der Emulsionen wurde durch Lagerung bei 40 °C und 80 °C sowie 5 Gefrier-Tau-Zyklen bestimmt. Alle erfindungsgemäßen Emulsionen waren nach 240 Stunden (80 °C) bzw. nach 600 Stunden (40° C) noch in Ordnung. Nach 5 Gefrier-Tau-Zyklen zeigten sich keine signifikanten Veränderungen der Emulsionen.

**Tabelle 2:**

| **Herstellung der Lacke und Lasuren** | | | | | | | | | |
|---|---|---|---|---|---|---|---|---|---|
| | Komponente **A** | | | Komponente **B** | | | Emulsion | | |
| Bsp. | Art | Massenanteil am Festkörper der Emulsion in % | Zugabe-temperatur | An | Massenanteil am Festkörper der Emulsion in % | Festkörper-Massenamteil in % | Festkörper-Massenanteil in % | Viskosität in mPa·s | Anwendung |
| 1 | A₁ | 90 | 60 | B₁ | 10 | 45 | 67 | 1220 | Malerlacke |
| 2 | A₂ | 85 | 105 | B₃ | 15 | 35 | 60 | 2600 | Malerlacke |
| 3 | A₃ | 92 | 55 | B₃ | 8 | 35 | 65 | 840 | Holzlasuren |
| 4 | A₄ | 90 | 30 | B₂ | 10 | 50 | 75 | 1710 | Holzlasuren |
| 5 | A₁ | 88 | 55 | B₂ | 12 | 50 | 65 | 1350 | Malerlacke |
| 6 | A₁ | 92 | 55 | B₃ | 8 | 35 | 60 | 1180 | Malerlacke |
| 7 | A₁ | 85 | 30 | B₁ | 15 | 45 | 70 | 620 | Holzlasuren |
| V | A₁ | 90 | 60 | E | 10 | 100 | 60 | 1050 | Holzlasuren |
| E: Fettalkohol-Äthoxylat, Gehalt an Oxyäthyleneinheiten ca. 80 % | | | | | | | | | |

### Herstellung von wasserverdünnbaren Lacken:

Aus den Alkydharzemulsionen der Beispiele 1 bis 7 wurden in bekannter Weise Weiß- bzw. Buntlacke unter Verwendung geeigneter Pigmentpasten in folgender Formulierung hergestellt:
- 53,1: Harzemulsion (Beispiel 1 bis 7, 60 bis 70 %ig)
- 0,7: Kombinationstrockner, wasserverdünnbar
- 1,0: Antihautmittel (Oxim)
- 5,0: Wachsemulsion, wäßrig
- 0,2: Untergrundbenetzungsmittel, wasserverdünnbar
- 1,0: Rheologieadditiv, wasserverdünnbar
- 0,5: Entschäumer (silikonfrei)
- 40,3: Weiße Pigmentpaste 70%ig, wasserverdünnbar
- 2,0: Wasser

Die Lacke wurden, nach Einstellen des pH-Wertes auf 8,0 bis 8,5 und Verdünnung auf Applikationsviskosität, auf Bleche aufgetragen und nach einer Lufttrocknung von ca. 24 Stunden bei Raumtemperatur unter anderem auf Glanz und Glanzschleier beurteilt. Die mit den erfindungsgemäß hergestellten Alkydharzemulsionen formulierten Lacke zeigten einen sehr guten Glanz, bei 20° 80 % und eine sehr gute Glanzhaltung. Der Vergleichs-Weißlack auf Basis einer Alkydharzemulsion, hergestellt mit einem handelsüblichen Fettalkohol-Äthoxylat als Emulgator, wies einen geringeren Glanzgrad (51 %) und eine deutlich geringere Glanzhaltung auf.

### Verträglichkeit mit anderen wasserverdünnbaren Bindemitteln:

Die erfindungsgemäß hergestellten Alkydharzemulsionen wiesen, im Gegensatz zu der AlkydharzemulsionV hergestellt mit einem herkömmlichen Emulgator, eine sehr gute Verträglichkeit mit anderen wasserverdünnbaren Bindemitteln, wie zum Beispiel Acrylharz-Dispersionen, auf.

## Patentansprüche

1. Wasserlöslicher oder wasserdispergierbarer Polyester **B** als Emulgator für wäßrige Emulsionen von Alkydharzen **A, dadurch gekennzeichnet, daß** der Polyester **B** erhältlich ist durch Umsetzung unter Polykondensationsbedingungen von Polyhydroxylkomponenten **Ba** aus der Klasse der Zuckeralkohole mit mehr als 4 Kohlenstoffatomen und mindestens fünf Hydroxylgruppen pro Molekül, Alkoxypolyäthylenglykolen **Bb** mit 1 bis 4 Kohlenstoffatomen im Alkylrest und einer zahlenmittleren molaren Masse Mₙ von 500 bis 2000 g/mol, cycloaliphatischen Dicarbonsäuren **Bc** und ungesättigten oder gesättigten Fettsäuren **Bd** mit 10 bis 22 Kohlenstoffatomen.

2. Polyester **B** nach Anspruch 1, **dadurch gekennzeichnet, daß** zusätzlich in der Eduktmischung eine Monocarbonsäure **Be** eingesetzt wird, die von **Bd** verschieden ist.

3. Polyester **B** nach Anspruch 1, **dadurch gekennzeichnet, daß** zu seiner Herstellung Massenanteile in der Eduktmischung eingesetzt werden von
10 bis 40 % der Polyhydroxylkomponente **Ba,**
35 bis 70 % des Alkoxypolyäthylenglykols **Bb,**
10 bis 30 % der cycloaliphatischen Dicarbonsäure **Bc,**
15 bis 40 % der Fettsäure **Bd,** und
0 bis 15 % einer anderen Monocarbonsäure **Be,** die von **Bd** verschieden ist.

4. Polyester **B** nach einem der Ansprüche 1 bis 3, **dadurch gekennzeichnet, daß** er eine Säurezahl unter 10 mg/g aufweist.

5. Verfahren zur Herstellung von Polyestern nach einem der Ansprüche 1 bis 4, **dadurch gekennzeichnet, daß** die Edukte **Ba** bis **Be,** gegebenenfalls unter Zusatz eines Veresterungskatalysators, auf eine Temperatur von 160 bis 250 °C erhitzt werden, das durch die Veresterung gebildete Wasser durch Destillation, einen Inertgasstrom oder unter Zusatz eines Azeotropbildners entfernt wird, gegebenenfalls der Azeotropbildner unter vermindertem Druck abdestilliert wird.

6. Verfahren zur Herstellung von wäßrigen Alkydharzemulsionen, **dadurch gekennzeichnet, daß** ein Polyester **B** nach einem der Ansprüche 1 bis 4 in Wasser zu einer Lösung mit einem Festkörper-Massenanteil von 30 bis 60 % gelöst wird, wobei diese Lösung eine dynamische Viskosität von 5000 bis 50 000 mPa·s besitzt, und daß das Alkydharz **A** mit dieser Lösung unter Scherung vermischt wird.

7. Wäßrige Alkydharzemulsionen hergestellt nach Anspruch 6, wobei der Massenanteil des Alkydharzes **A** im Feststoff der Emulsion 70 bis 95 %, und der des Polyesters **B** 5 bis 30 % beträgt, wobei sich die Massenanteile auf 100 % ergänzen.

8. Wäßrige Alkydharzemulsionen nach Anspruch 7, **dadurch gekennzeichnet, daß** die Alkydharze **A** einen Ölgehalt von 40 bis 85 g/(100 g) und eine Säurezahl von weniger als 15 mg/g aufweisen.

9. Wasserverdünnbare Lacke oder Lasuren, enthaltend Alkydharzemulsionen nach Anspruch 7 oder 8.

10. Verwendung von wasserverdünnbaren Alkydharzemulsionen gemäß Anspruch 7 als Bindemittel zur Beschichtung von Textilien, mineralischen Materialien, Metallen und Holz.

## Claims

1. A water-soluble or water-dispersible polyester **B** as emulsifier for aqueous emulsions of alkyd resins **A,** wherein the polyester **B** is obtainable by reacting, under polycondensation conditions, polyhydroxyl components **Ba** from the class of the sugar alcohols having more than 4 carbon atoms and at least five hydroxyl groups per molecule, alkoxypolyethylene glycols **Bb** having 1 to 4 carbon atoms in the alkyl radical and a number-average molar mass Mₙ of from 500 to 2000 g/mol, cycloaliphatic dicarboxylic acids **Bc** and unsaturated or saturated fatty acids **Bd** having 10 to 22 carbon atoms.

2. A polyester **B** as claimed in claim 1, wherein the mixture of starting materials further comprises a monocarboxylic acid **Be** which is different from **Bd.**

3. A polyester **B** as claimed in claim 1, which is prepared using mass fractions in the mixture of starting materials of
from 10 to 40% of the polyhydroxyl component **Ba,**
from 35 to 70% of the alkoxypolyethylene glycol **Bb,**
from 10 to 30% of the cycloaliphatic dicarboxylic acid **Bc,** from 15 to 40% of the fatty acid **Bd,** and
from 0 to 15% of another monocarboxylic acid **Be** which is different from **Bd.**

4. A polyester **B** as claimed in any of claims 1 to 3, which has an acid number of less than 10 mg/g.

5. A process for preparing a polyester as claimed in any of claims 1 to 4, which comprises heating the starting materials **Ba** to **Be,** with or without addition of an esterification catalyst, at a temperature of from 160 to 250°C, removing the water formed by the esterification by means of distillation, an inert gas stream, or with addition of an azeotrope former, and, if appropriate, distilling off the azeotrope former under reduced pressure.

6. A process for preparing an aqueous alkyd resin emulsion, which comprises dissolving a polyester **B** as claimed in any of claims 1 to 4 in water to give a solution having a mass fraction of solids of from 30 to 60%, said solution possessing a dynamic viscosity of from 5000 to 50,000 mPa·s, and mixing the alkyd resin **A** with this solution under shear conditions.

7. An aqueous alkyd resin emulsion prepared as claimed in claim 6, the mass fraction of the alkyd resin **A** in the solids of the emulsion being from 70 to 95% and that of the polyester **B** being from 5 to 30%, the mass fractions adding up to 100%.

8. An aqueous alkyd resin emulsion as claimed in claim 7, wherein the alkyd resins **A** have an oil content of from 40 to 85 g/(100 g) and an acid number of less than 15 mg/g.

9. A water-dilutable paint or glaze comprising an alkyd resin emulsion as claimed in claim 7 or 8.

10. The use of a water-dilutable alkyd resin emulsion as claimed in claim 7 as a binder for coating textiles, mineral materials, metals, or wood.

## Revendications

1. Polyester **B** hydrosoluble ou dispersable dans l'eau en tant qu'émulsifiant pour émulsions aqueuses de résines alkydes **A, caractérisé en ce qu'**on peut obtenir le polyester **B** par réaction sous conditions de polycondensation du composant polyhydroxylé **Ba** pris dans la catégorie des alcools de sucre présentant plus de 4 atomes de carbone et au moins cinq groupes hydroxyle par molécule, des alkoxypolyéthylènepolyglycols **Bb** présentant 1 à 4 atomes de carbone dans le reste alkyle et une masse molaire moyenne en nombre Mₙ de 500 à 2000 g/mole, des acides dicarboxyliques cycloaliphatiques **Bc** et des acides gras insaturés ou saturés **Bd** présentant 10 à 22 atomes de carbone.

2. Polyester **B** selon la revendication 1, **caractérisé en ce qu'**on utilise dans le mélange des produits de départ en plus un acide monocarboxylique **Be,** qui est différent du **Bd.**

3. Polyester **B** selon la revendication 1, **caractérisé en ce qu'**on utilise dans le mélange de produits de départ pour sa préparation des taux en masse de
10 à 40 % du composant polyhydroxylé **Ba**
35 à 70 % de l'alkoxypolyéthylèneglycol **Bb**
10 à 30 % de l'acide dicarboxylique cycloaliphatique **Bc**
15 à 40 % de l'acide gras **Bd** et
0 à 15 % d'un autre acide monocarboxylique **Be** qui est différent de **Bd.**

4. Polyester **B** selon l'une des revendications 1 à 3, **caractérisé en ce qu'**il présente un indice d'acide inférieur à 10 mg/g.

5. Procédé de préparation de polyesters selon l'une des revendications 1 à 4, **caractérisé en ce qu'**on chauffe les produits de départ **Ba** à **Be,** éventuellement en ajoutant un catalyseur d'estérification, à une température de 160 à 250°C, l'eau formée par estérification étant éliminée par distillation, par un flux de gaz inerte ou par ajout d'un composant azéotrope, éventuellement en chassant par distillation sous pression réduite le composant azéotrope.

6. Procédé pour la préparation d'émulsions aqueuses de résines alkydes, **caractérisé en ce qu'**on dissout un polyester **B** selon l'une des revendications 1 à 4 dans l'eau pour obtenir une solution ayant une teneur en matière solide de 30 à 60 %, cette solution possède une viscosité dynamique de 5000 à 50 000 mPa.s et **en ce qu'**on mélange la résine alkyde **A** avec cette solution sous contraintes de cisaillement.

7. Emulsions aqueuses de résines alkydes préparées selon la revendication 6, le taux en masse de la résine alkyde **A** dans la matière solide de l'émulsion étant de 70 à 95 %, et le taux du polyester **B** étant de 5 à 30 %, les taux en masse se complètent à 100 %.

8. Emulsions aqueuses de résines alkydes préparées selon la revendication 7, **caractérisées en ce que** la résine alkyde **A** présente une teneur en huile de 40 à 85 g/(100 g) et un indice d'acide inférieur à 15 mg/g.

9. Vernis et lasures diluables par l'eau, renfermant des émulsions de résines alkydes selon la revendication 7 ou 8.

10. Utilisation d'émulsions de résines alkydes diluables par l'eau selon la revendication 7 en tant que revêtement de matières textiles, de matières minérales, de métaux ou de bois.
